Europäisches Patentamt

European Patent Office

Office européen des brevets

(19)

(11) Veröffentlichungsnummer: **0 156 175**
**B1**

(12) **EUROPÄISCHE PATENTSCHRIFT**

(45) Veröffentlichungstag der Patentschrift: **08.08.90**

(51) Int. Cl.⁵: **F 23 N 3/04**

(21) Anmeldenummer: **85102168.3**

(22) Anmeldetag: **27.02.85**

(54) **Einrichtung zum Regeln des Zugs im Zuluftweg oder im Abgasweg einer Feuerstätte.**

(30) Priorität: **27.02.84 DE 3406998**

(43) Veröffentlichungstag der Anmeldung:
**02.10.85 Patentblatt 85/40**

(45) Bekanntmachung des Hinweises auf die
Patenterteilung:
**08.08.90 Patentblatt 90/32**

(84) Benannte Vertragsstaaten:
**CH DE FR LI NL SE**

(56) Entgegenhaltungen:
**DE-A-1 954 167**
**GB-A-2 027 231**
**US-A-2 859 617**
**US-A-3 425 277**
**US-A-3 683 692**
**US-A-4 406 396**

(73) Patentinhaber: **Wollank, Gerhard, Prof. Dipl.-Phys.**
**Freiheitstrasse 15**
**D-5040 Brühl-Heide (DE)**

(72) Erfinder: **Wollank, Gerhard, Prof. Dipl.-Phys.**
**Freiheitstrasse 15**
**D-5040 Brühl-Heide (DE)**

(74) Vertreter: **Stark, Walter, Dr.-Ing.**
**Moerser Strasse 140**
**D-4150 Krefeld (DE)**

Courier Press, Leamington Spa, England.

**Beschreibung**

Die Erfindung betrifft eine Einrichtung zum Regeln des Zugs im Zuluftweg oder im Abgasweg einer Feuerstätte, insbesondere einer Gasfeuerstätte, mit den Merkmalen aus dem Oberbegriff des Patentanspruchs 1.

Bei einer aus der US-A-44 06 396 bekannten, gattungsgemäßen Einrichtung werden die Spannungsunterschiede an den Widerstandselementen der Sensoren erfaßt und ausgeregelt. Der Widerstandswert eines in strömender Luft befindlichen Widerstandselementes ändert sich aber mit der von der Luftgeschwindigkeit abhängigen Kühlleistung. Die Kühlleistung muß mit einer ebenso großen elektrischen Leistung kompensiert werden, wenn sich der Widerstandswert nicht ändern soll. Bei konstantem Widerstandswert ist die elektrische Leistung abhängig vom Quadrat des Stromes bzw. vom Quadrat der Spannung. Deswegen ist es mit der bekannten Einrichtung nicht ohne weiteres möglich, die Widerstandswerte der Widerstandselemente auf gleich große Werte zu regeln.

Ähnliches gilt auch für eine aus der US-A-34 25 277 bekannte Einrichtung, bei der die Stromunterschiede der als Heißleiter ausgebildeten Widerstandselemente erfaßt und ausgeregelt werden.

In anderem Zusammenhang ist es aus der DE-A-95 41 67 bekannt, die Strömungsgeschwindigkeit eines strömenden Mediums mit Hilfe einer Meßschaltung zu ermitteln, welche in zwei Stromwegen je einen temperaturabhängigen Widerstand umfaßt. Einer der temperaturabhängigen Widerstände ist dem strömenden Medium ausgesetzt, wodurch er abgekühlt wird und seinen Widerstandswert, verglichen mit dem Widerstandswert des anderen, auf konstanter. Temperatur gehaltenen temperaturabhängigen Widerstandswerts verändert. Bei der bekannten Meßschaltung handelt es sich nicht um eine Schaltung zum Regeln des Zugs im Zuluft- bzw. Abgasweg einer Feuerstätte.

Es ist Aufgabe der Erfindung, eine Einrichtung zum Regeln des Zugs im Zuluft- bzw. Abgasweg einer Feuerstätte anzugeben, bei welcher der Druck im Zuluft- bzw. Abgasweg durch einen elektrisch, das heißt ohne mechanisch bewegte Teile arbeitenden Sensor erfaßt wird, und zwar so, daß der Sensor auch über lange Zeiträume hinweg keine oder eine nur geringe Nullpunktdrift zeigt.

Diese Aufgabe wird gelöst, mit einer Einrichtung, die die Merkmale des Patentanspruchs 1 aufweist.

Die Erfindung macht sich zunutze, daß die Strömungsgeschwindigkeit der über den Kanal im Nebenschluß dem Zuluft- bzw. Abgasweg zugeführten Umgebungsluft in vorbestimmter Weise abhängig vom Druck in dem Zuluft- bzw. Abgasweg, beispielsweise dem Luftansaugrohr oder dem Abgasrohr ist. Da beide temperaturabhängigen Widerstandselemente der Umgebungsluft ausgesetzt sind, wirken sich Temperaturschwankungen der Umgebungsluft nicht aus. Die Nullpunktdrift des Sensor ist auch über längere Zeiträume hinweg gering, so daß der Druck im Zuluft- bzw. Abgasweg mit sehr engen Toleranzen auch auf sehr geringen Druckwerten konstant gehalten werden kann. Die Regeleinrichtung eignet sich insbesondere für Drücke von weniger als 20 Pascal.

Das in der ruhenden Umgebungsluft der ersten Kammer angeordnete Widerstandselement bildet ein Bezugselement, auf das der an dem anderen, in der zweiten Kammer angeordneten, durch die Luftströmung gekühlten Widerstandselement gemessene Parameter bezogen wird. Die Vergleicherschaltung liefert den Differenzwert zwischen dem Meßparameter und dem Bezugsparameter. Hierzu liegen die temperaturabhängigen Widerstandselemente in zwei Stromzweigen, die an einen gemeinsamen, bezugspotentialführenden Schaltungspunkt angeschlossen sind. Die Vergleicherschaltung erzeugt das den Druck im Zuluft- bzw. Abgasweg repräsentierende Ausgangssignal des Sensors, abhängig von der Potentialdifferenz einander entsprechender Anschlüsse der Widerstandselemente.

Bei den Stromzweigen kann es sich um die Zweige einer Brückenschaltung handeln, auf deren Diagonalspannung die Vergleicherschaltung anspricht. Der Schaltungsaufwand einer solchen Schaltung ist vergleichsweise gering. Er läßt sich bei als Heißleiter ausgebildeten temperaturabhängigen Widerstandselementen noch weiter verringern, wenn der Abgleich der Brückenschaltung nicht elektrisch, sondern mittels einer kleinen, auf den Bezugs-Heißleiter in der ersten Kammer aufgesetzten Kühlfahne und einer justierbaren Drosseleinrichtung im Zuluftkanal der zweiten Kammer, beispielsweise einer Stellschraube oder dergleichen erfolgt.

Besonders hohe Nullpunktskonstanz läßt sich erreichen, wenn dafür gesorgt wird, daß die Temperaturen der beiden temperaturabhängigen Widerstandselemente während der Messung gleich groß sind. Hierzu läßt sich die vorstehend erwähnte Kühlfahne ausnutzen, die das in der ruhenden Luft angeordnete Widerstandselement in gleichem Maße wie das von der strömenden Luft gekühlte Widerstandselement kühlt.

Besonders geringe Driftwerte des Sensors lassen sich auch ohne Kühlfahne erreichen, wenn die beiden, die temperaturabhängigen Widerstandselemente enthaltenden Stromzweige an eine Speisespannungsquelle fester Spannung einerseits und eine Speisespannungsquelle steuerbarer Spannung andererseits angeschlossen sind. Eine sowohl auf die Ströme in den Stromzweigen als auch auf die Spannung an den Widerstandselementen ansprechende Steuerschaltung regelt sowohl den Strom durch das von der Luftströmung gekühlte Widerstandselement als auch den Spannungsabfall an dem Widerstandselement auf den Wert des Stroms bzw. des Spannungsabfalls des in der ruhenden Umgebungsluft angeordneten Widerstandselements. Auf diese Weise wird erreicht, daß die Widerstände der beiden Widerstandselemente auf gleiche Werte

geregelt und beide Widerstandelemente unabhängig von der Temperatur der Umgebungsluft auf gleicher Temperatur gehalten werden.

Zum Erfassen der Strom- und Spannungswerte sollen zwei Vergleicherschaltungen vorgesehen sein, von denen die erste Vergleicherschaltung ein der Differenz der Ströme in den beiden Stromzweigen entsprechendes Ausgangssignal und die zweite Vergleicherschaltung ein der Differenz der Spannungen an den bezugspotentialabgewandten Anschlüssen des Widerstandselements entsprechendes Ausgangssignal liefert. Das Ausgangssignal einer der beiden Vergleicherschaltungen steuert die steuerbare Speisespannungsquelle bzw. bildet vorzugsweise diese Spannungsquelle, während das Ausgangssignal der anderen Vergleicherschaltung die Amplitude des Ausgangssignals dieser die Spannungsquelle steuernden Vergleicherschaltung derart steuert, daß die gewünschte Übereinstimmung der Widerstandswerte der temperaturabhängigen Widerstandselemente erreicht wird.

Um mit einer möglichst geringen Anzahl an Differenzverstärkern auszukommen, ist vorzugsweise vorgesehen, daß die beiden Spannungsquellen bezogen auf das Bezugspotential entgegengesetzte Polarität haben. Die Differenzbildung läßt sich auf diese Weise durch eine einfache Widerstands-Summierschaltung erreichen.

Der Strom durch die temperaturabhängigen Widerstände ist zweckmäßigerweise so bemessen, daß sich diese auf eine Temperatur von wenigstens 60°C, vorzugsweise mehr als 100°C erwärmen. Eine Verfälschung der Messung durch Kondenswasser oder dergleichen wird auf diese Weise vermieden.

Um die beiden temperaturabhängigen Widerstandselemente möglichst gut auf gleicher Temperatur zu halten, hat es sich als günstig erwiesen, wenn die beiden, die Widerstandselements aufnehmenden Kammern in einem Block aus einem die Wärme gut leitenden Material, insbesondere Metall, vorgesehen sind. Andererseits sollen die Widerstandelemente insbesondere für die Zugmessung an einem Abgasrohr von diesem thermisch entkuppelt sein. Der die zweite Kammer mit dem Zuluft- bzw. Abgasweg verbindende Kanal besteht deshalb zweckmäßigerweise aus einem Rohr aus schlecht wärmeleitenden Material, insbesondere Keramik. Gegebenenfalls können zwischen dem die Kammern enthaltenden Block und dem Abgasrohr zusätzlich Strahlungsbleche vorgesehen sein.

Verunreinigungen an den temperaturabhängigen Widerstandselementen können zu Meßfehlern führen. Eine Verunreinigung vom Zuluft- bzw. Abgasweg her läßt sich verhindern, wenn die zweite Kammer, in welcher das strömungsgekühlte Widerstandselement angeordnet ist, über zwei koaxial ineinandergreifende Rohre mit dem Zuluft- bzw. Abgasweg verbunden ist. Das durchmessergrößere Rohr ragt in den Zuluft- bzw. Abgasweg hinein und hat eine in Strömungsrichtung weisende Öffnung. Das durchmesserkleinere, innere Rohr ist mit der zweiten Kammer verbunden. Die beiden Rohre überlappen sich und sind auf der Kammerseite des Überlappungsbereichs gegeneinander abgedichtet. In das durchmessergrößere Rohr eindringender Staub und dergleichen lagert sich in dem Zwischenraum zwischen den beiden Rohren ab, ohne in das innere Rohr einzutreten.

Normalerweise ergibt sich auch bei abgeschalteter Feuerstätte und üblicherweise geschlossenem Stellorgan ein Zug in dem Zuluft- bzw. Abgasweg. Um zu verhindern, daß aufgrund dieses Zugs über die zweite Kammer und den Zuluftkanal ständig Umgebungsluft angesaugt wird, ist zweckmäßigerweise vorgesehen, daß das Stellorgan mit einer Klappe gekuppelt ist, die in der den Zuluft- bzw. Abgasweg sperrenden Stellung des Stellorgans die Einlaßöffnungen der beiden Kammern sperrt. Gegebenenfalls kann vor den Einlaßöffnungen ein Staubfilter, beispielsweise ein elektrostatisches Filter angeordnet werden.

Aus Sicherheitsgründen soll die Feuerstätte lediglich dann in Betrieb genommen werden können, wenn die Funktionsfähigkeit des Stellorgans sichergestellt ist. Es muß verhindert werden, daß der Brenner eingeschaltet bleibt, wenn das Stellorgan, beispielsweise eine Abgasklappe, geschlossen bleibt. An dem Stellorgan sind deshalb bevorzugt Endschalter, beispielsweise magnetfeldempfindliche und von einem mit dem Stellorgan gekuppelten Magnet gesteuerte Schalter vorgesehen, die in der offenen und der geschlossenen Stellung des Stellorgans ansprechen. Die Endschalter lassen sich vorteilhaft zur Betriebssteuerung der Feuerstätte ausnutzen. So kann vorgesehen sein, daß eine von den beiden Endschaltern gesteuerte Feuerstättensteuerung auf eine Wärmebedarfs-Steuersignal, insbesondere eines Thermostaten hin das Stellorgan in die Sperrstellung treibt und, gesteuert von dem die Sperrstellung erfassenden Endschalter eine Sensor-Nullpunkt-Kontrollschaltung aktiviert. Die Kontrollschaltung überprüft bei gesperrtem Zuluft- bzw. Abgasweg den Sensor auf Nullpunktsabweichungen und gibt bei korrektem Nullpunkt nachfolgend die Regelschaltung zum druckabhängigen Regeln der Stellung des Sperrorgans frei. Zweckmäßigerweise wird die Freigabe der Regelschaltung gegenüber dem Einschalten des Brenners zeitlich verzögert, um zu verhindern, daß die Regelschaltung dem Anlaufen des Brenners entgegenwirkt. Da für das Einschalten des Brenners das Sperrorgan bzw. die Abgasklappe vollständig geöffnet wird, wird die Regelschaltung bevorzugt über den die Offenstellung anzeigenden Endschalter freigegeben.

Das Abschalten des Brenners der Feuerstätte erfolgt bei Beendigung des Wärmebedarfssignals zweckmäßigerweise sofort, während die Regelschaltung über ein weiteres Zeitverzögerungsglied gesperrt wird. Auf diese Weise wird sichergestellt, daß das Sperrorgan erst nach Ablauf einer vorbestimmten Zeitspanne schließt und Abgase ungehindert abziehen können.

Die vorstehend erläuterte Regelschaltung hält den Druck in dem Zuluft- bzw. Abgasweg vorzugsweise von einem elektrischen Sollwertsignal abhängig konstant. Dies hat den Vorteil, daß das Sollwertsignal auf einfache Weise abhängig von einem die Brennerleistung der Feuerstätte vorgebenden Signal erzeugt werden kann und hierdurch der Zug im Zuluft- bzw. Abgasweg entsprechend dem für die Brennerleistung optimalen stöchiometrischen Luft-Brennstoffverhältnis eingestellt werden kann.

Im folgenden soll die Erfindung anhand von Zeichnungen näher erläutert werden. Es zeigt:

Figur 1 ein schematisches Blockschaltbild einer erfindungsgemäßen Einrichtung zum Regeln des Zugs im Zuluft- oder Abgasweg einer Feuerstätte;

Figur 2 ein schematisches Blockschaltbild eines als Heißleiter-Brückenschaltung aufgebauten, den Druck im Zuluft- bzw. Abgasweg der Feuerstätte erfassenden Sensors;

Figur 3 ein schematisches Blockschaltbild eines als Kaltleiter-Kompensationsschaltung aufgebauten, den Druck im Zuluft- bzw. Abgasweg der Feuerstätte erfassenden Sensors;

Figur 4 ein schematisches Blockschaltbild eines als Heißleiter-Kompensationsschaltung aufgebauten, den Druck im Zuluft- bzw. Abgasweg der Feuerstätte erfassenden Sensors;

Figur 5 ein Blockschaltbild einer Feuerstättensteuerung;

Figur 6a bis k Zeitdiagramme zur Erläuterung der Funktionsweise der Feuerstättensteuerung gemäß Figur 5;

Figur 7 eine teilweise aufgebrochene Seitenansicht einer im Rahmen der Feuerstättensteuerung der Figur 5 verwendbaren Abgasklappe;

Figur 8 eine schematische, teilweise geschnittene Darstellung eines Ausführungsbeispiels der mechanischen Konstruktion des den Druck im Zuluft- bzw. Abgasweg erfassenden Sensors und

Figur 9 eine Schnittansicht des Sensors gesehen entlang einer Linie IX—IX in Figur 8.

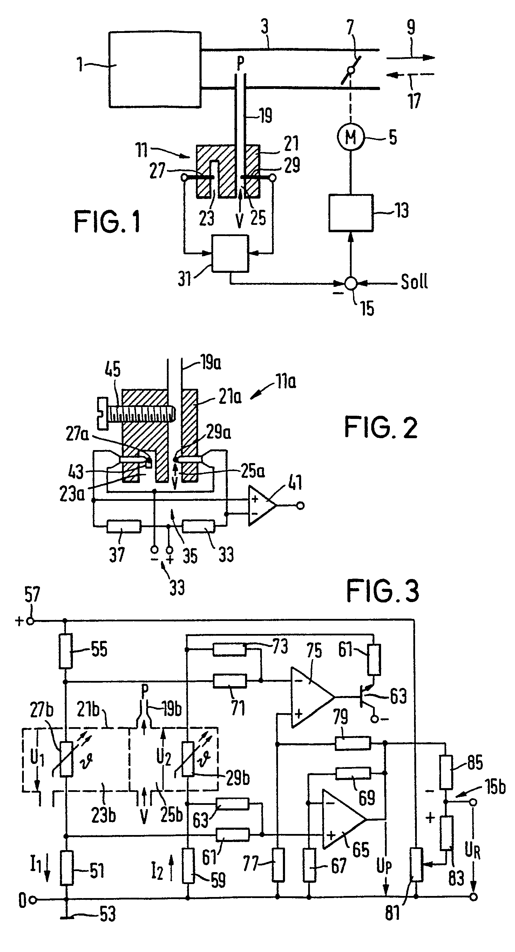

Figur 1 zeigt eine Feuerstätte 1, insbesondere eine Gasfeuerstätte, in deren Abgasrohr 3 ein Stellorgan, insbesondere eine von einem Motor 5 schwenkbare Abgasklappe 7 angeordnet ist. Die Abgasklappe 7 verändert abhängig von ihrer Stellung den Strömungsquerschnitt für die in Richtung eines Pfeils 9 strömenden Abgase der Feuerstätte 1 zwischen einer den Querschnitt vollständig sperrenden Stellung und einer den Querschnitt vollständig freigebenden Stellung. Im Strömungsweg zwischen der Feuerstätte 1 und der Abgasklappe 7 mißt ein Sensor 11 den Druck p in dem Abgasrohr 3. Der Sensor 11 liefert ein Istsignal an einen Regler 13, welcher abhängig von einem insbesondere in Form eines elektrischen Sollsignals vorgebbaren Sollwert ein den Motor 5 steuerndes Fehlersignal erzeugt. Die Abgasklappe 7 wird über den Motor 5 so eingestellt, daß der Druck p im Abgasrohr auf dem durch den Sollwert vorgegebenen Wert konstant gehalten wird. Figur 1 zeigt bei 15 eine Vergleichereinrichtung, die das der Differenz zwischen dem Sollsignal und dem Istsignal entsprechende Fehlersignal erzeugt und dem Regler 13 zuführt.

Die Vergleichereinrichtung 15 kann Bestandteil der mechanischen Konstruktion des Sensors 11 sein oder aber durch eine elektrische Vergleicherschaltung gebildet sein. Das Sollsignal wird bevorzugt entsprechend dem optimalen stöchiometrischen Verhältnis von Zuluft zu Brennstoff vorgegeben. Bei Feuerstätten mit variabler Brennerleistung wird das Sollsignal selbsttätig der eingestellten Brennerleistung angepaßt.

Figur 1 wurde vorstehend für eine Abgasregelschaltung erläutert. In entsprechender Weise kann die Regelschaltung zur Regelung der Luftströmung in einem der Feuerstätte 1 in Richtung eines Pfeils 17 die Verbrennungsluft zuführenden Zuluftrohrs oder dergleichen eingesetzt werden.

Der Sensor 11 mißt den Druck p abhängig von der Strömungsgeschwindigkeit v in einem im Nebenschluß in das Abgasrohr 3 mündenden Zuluftrohr 19. Das Zuluftrohr 19 hat definierten Querschnitt, womit die Strömungsgeschwindigkeit v mit der Umgebungsluft über das Zuluftrohr 19 in das Abgasrohr 3 eingesaugt wird, ein Maß für den im Abgasrohr 3 herrschenden Zug bzw. Druck ist. Der Sensor 11 umfaßt außerhalb des Abgasrohrs 3 und von diesem thermisch isoliert in einem Block 21 aus Wärme gut leitendem Material, beispielsweise Aluminium, eine zur Umgebungsluft offene Bezugskammer 23 und eine ebenfalls zur Umgebungsluft offene Meßkammer 25. Die Meßkammer 25 ist über das Zuluftrohr 19 mit dem Abgasrohr 3 verbunden. In der Bezugskammer 23 und der Meßkammer 25 ist jeweils ein temperaturabhängiges Widerstandselement 27 bzw. 29 angeordnet, dessen elektrischer Widerstand ein Maß für die Temperatur des Widerstandselements ist. Die Widerstandselemente 27, 29 sind an eine Vergleicherschaltung 31 angeschlossen, die abhängig von der Differenz der Widerstandswerte das den Druck im Abgasrohr 3 repräsentierende Istsignal liefert.

Der Block 21 sorgt dafür, daß die Kammern 23, 25 und die Widerstandselemente 27, 29 auf gleicher Grundtemperatur gehalten werden. Der Widerstand des Widerstandselements 27 ist ein Maß für die Temperatur der ruhenden Luft in der Bezugskammer 23 und damit ein Maß für die Temperatur der Umgebungsluft. Bei abgeschalteter Feuerstätte 1 und fehlender Abgasströmung im Abgasrohr 3 sind die Widerstandswerte der Widerstandselemente 27, 29 gleich. Bei Zug im Abgasrohr 3 wird das Widerstandselement 29 in der Meßkammer 25 durch die durch das Zuluftrohr 19 in das Abgasrohr 3 einströmende Umgebungsluft gekühlt und die Vergleicherschaltung 31 liefert ein den Druck p repräsentierendes Istsignal.

Figur 2 zeigt Einzelheiten einer ersten Ausführungsform eines Sensors. Gleichwirkende Teile sind in Figur 2 mit den Bezugszahlen der Figur 1 bezeichnet und zur Unterscheidung mit dem Buchstaben a versehen. Zur Erläuterung wird auf die Beschreibung der Figur 1 Bezug genommen.

Die in der Bezugskammer 23a bzw. der Meßkammer 25a des Blocks 21a angeordneten Widerstandselemente 27a, 29a sind als Heißleiter ausgebildet und in zwei zueinander parallelgeschaltete, an eine Speisespannungsquelle 33 angeschlossene Stromzweige einer Wheatstone-Brückenschaltung 35 geschaltet. Jeder dieser Stromzweige enthält in Serie zu dem Widerstandselement 27a, 29a einen Widerstand 37 bzw. 39. Ein Differenzverstärker 41, dessen Eingänge an den Verbindungspunkt des Widerstandselements 27a und des Widerstands 37 einerseits und an den Verbindungspunkt des Widerstandselements 29a und des Widerstands 39 andererseits angeschlossen ist, liefert ein der Diagonalspannung der Brückenschaltung 35 proportionales Ausgangssignal. Das Ausgangssignal ist ein Maß für die Differenz der Widerstandswerte der Widerstandselemente 27a, 29a und damit ein Maß für den Druck am abgasrohrseitigen Ende des Zuluftrohrs 19a. Die Widerstandswerte der Brückenschaltung 35 sind so bemessen, daß die Brückenschaltung bei ruhender Luft in beiden Kammern 23a, 25a abgeglichen ist. Sofern keine gepaarten Widerstände in den Stromzweigen verwendet werden, muß einer der Widerstände als Potentiometer ausgebildet sein, um die Brückenschaltung 35 abgleichen zu können. Ein derartiges, vielfach störanfälliges Potentiometer für den Brückenabgleich erübrigt sich, wenn, wie Figur 2 zeigt, das Widerstandselement 27a mit einer kleinen Kühlfahne 43 versehen ist, die die Kühlwirkung des Widerstandselements 27a bezogen auf das Widerstandselement 29a bei ansonsten gleichen Verhältnissen erhöht. Die Kühlfahne 43 erlaubt bei nicht exakt übereinstimmenden Widerstandswerten einen Abgleich der Brückenschaltung 35. Der Sollwert der Regelschaltung wird mittels einer den Strömungsquerschnitt der Meßkammer 25a bzw. des Zuluftrohrs 19a justierbar begrenzenden Drosselschraube 45 eingestellt. Wesentlich ist aber, daß mittels der Kühlfahne 43 die Temperatur des Widerstandselements 27a auf die Temperatur des durch die Zuluftströmung gekühlten Widerstandselements 29a abgesenkt werden kann, derart, daß bei abgeglichener Brückenschaltung 35 die Temperaturen gleich sind. Die Nullpunktskonstanz des Sensors läßt sich hierdurch erheblich verbessern.

Figur 3 zeigt eine weitere Ausführungsform eines Sensors, bei welchem im Unterschied zum Sensor der Figur 2 der Sollwert der Regelschaltung elektrisch vorgebbar ist. Darüber hinaus wird die Temperatur der beiden Widerstandselemente zur Verbesserung der Nullpunktskonstanz des Sensors ohne Verwendung einer Kühlfahne auf gleiche Werte geregelt. Gleichwirkende Teile der Figur 3 sind mit den Bezugszahlen der Figur 1 und zusätzlich durch den Buchstaben b bezeichnet. Zur Erläuterung dieser Teile wird auf die Beschreibung der Figur 1 Bezug genommen.

Die temperaturabhängigen Widerstandselemente 27b, 29b sind als Kaltleiter ausgebildet. Das Widerstandselement 27b ist über einen als Shuntwiderstand zum Erfassen des durch den Kaltleiter 27b fließenden Stroms $I_1$ dienenden Widerstand 51 mit der Nullpotential führenden Masse 53 verbunden. Der masseferne Anschluß des Kaltleiters 27b ist über einen Vorwiderstand 55 mit einer positiven Konstanspannungsquelle 57 verbunden. Der Kaltleiter 29b ist über einen als Shuntwiderstand zum Erfassen des durch den Kaltleiter 29b fließenden Stroms $I_2$ dienenden Widerstand 59 mit Masse 53 verbunden. An den massefernen Anschluß des Kaltleiters 29b ist eine aus einem Widerstand 61 und einem Transistor 63 gebildete steuerbare, negative Spannungsquelle angeschlossen. Die Widerstände 51, 59 sind gleich groß. Ebenso sind die Kaltleiter 27b und 29b gleich.

Die am massefernen Anschluß des Kaltleiters 29b anliegende Spannung wird abhängig von der Strömungskühlung des Kaltleiters 29b und damit abhängig vom Druck im Abgasrohr so geregelt, daß die Ströme $I_1$ und $I_2$ gleich sind und außerdem die am Kaltleiter 29b abfallende Spannung $U_2$ gleich der am Kaltleiter 27b abfallenden Spannung $U_1$ ist. Auf diese Weise wird das Verhältnis $U_2$ zu $I_2$ konstant und gleich dem Verhältnis $U_1$ zu $I_1$ gehalten. Mit anderen Worten wird der Widerstand des Kaltleiters 29b konstant und gleich dem Widerstand des Kaltleiters 27b gehalten, so daß beide Kaltleiter gleiche Temperatur haben und sich eine besonders kleine Nullpunktsdrift des Sensors ergibt. An die Verbindungspunkte des Kaltleiters 27b und des Widerstands 51 sowie des Kaltleiters 29b und des Widerstands 59 ist eine aus zwei gleichen Widerständen 61, 63 gebildete Summationsschaltung angeschlossen. Die Summationsschaltung liefert aufgrund der verschiedenen Polarität der an die Kaltleiter 27b, 29b angeschlossenen Spannungsquellen eine der Differenz der Spannungsabfälle an den Widerständen 51, 59 und damit der Differenz der Ströme $I_1$, $I_2$ entsprechendes Signal an den nicht invertierenden Eingang eines Operationsverstärkers 65. Der Operationsverstärker ist mit seinem invertierenden Eingang über einen Widerstand 67 an Masse 53 angeschlossen und über einen Widerstand 69 von seinem Ausgang zum invertierenden Eingang rückgekoppelt. Der Operationsverstärker 65 liefert an seinem Ausgang das den Istwert des vom Sensor erfaßten Drucks repräsentierende Signal.

An die massefernen Anschlüsse der Kaltleiter 27b, 29b ist eine aus zwei Widerständen 71, 73 bestehende Summationsschaltung angeschlossen, die ein der Spannungsdifferenz zwischen den massefernen Anschlüssen proportionales Signal an den invertierenden Eingang eines Operationsverstärkers 75 liefert. Die Spannungen an den massefernen Anschlüssen der Kaltleiter 27b, 29b ist, nachdem die Spannungsabfälle an den Widerständen 51, 59 gleich sind, ein Maß für die Spannungen $U_1$ und $U_2$. Der Operationsverstärker 75 steuert den Transistor 63 der steuerbaren Spannungsquelle abhängig von der Spannungsdifferenz an seinem invertierenden Eingang und abhängig von einer Steuerspannung an seinem nicht invertierenden Eingang, die über eine Spannungsteilerschaltung aus zwei Widerständen 77, 79 proportional zum Istsignal am Ausgang des Operationsverstärkers 65 erzeugt wird. Die Widerstände 77, 79 sind so bemessen, daß sich die Spannung $U_2$ proportional zur Spannung an dem Widerstand 59 und damit proportional zum Strom durch den Kaltleiter 29b ändert.

Ist der Schornsteinzug und damit die Strömungsgeschwindigkeit v gleich O, so stellt der Operationsverstärker 75 am massefernen Anschluß des Kaltleiters 29b eine Spannung ein, die gleich der Spannung am massefernen Anschluß des Kaltleiters 27b ist. Wird der Kaltleiter 29b entsprechend einem vorhandenen Schornsteinzug gekühlt, so verringert sich die Temperatur und damit der Widerstand des Kaltleiters 29b. Dementsprechend steigt die Spannung am Widerstand 59 und der Operationsverstärker 65 erzeugt ein den Schornsteigzug repräsentierendes Istsignal. Entsprechend dem Istsignal erhöht der Operationsverstärker 75 die Spannung am massefernen Anschluß des Kaltleiters 29b und damit die Spannung $U_2$.

Figur 3 zeigt Einzelheiten einer elektrischen Variante der Vergleicherschaltung 15b, die abhängig von dem Istsignal $U_p$ das der Regelabweichung entsprechende Fehlersignal $U_R$ erzeugt. Ein als einstellbarer Spannungsteiler zwischen Masse 53 und die Spannungsquelle 57 geschaltetes Potentiometer 81 liefert über einen Widerstand 83 ein positives Sollwertsignal an den Summationispunkt 15b. Der Ausgang des Operationsverstärkers 65 liefert das Istsignal in invertierter Form und ist über einen weiteren Widerstand 85 mit dem Summationspunkt 15b verbunden. In diesem Zusammenhang soll erwähnt werden, daß die Operationsverstärker 65, 75 bezogen auf das Nullpotential der Masse 53 sowohl mit positiver als auch mit negativer Betriebsspannung versorgt sind, so daß ihre Ausgangssignale sowohl positive als auch negative Spannungswerte annehmen können. Damit kann die durch den Widerstand 61 und den Transistor 63 gebildete steuerbare Spannungsquelle gegebenenfalls entfallen und der Operationsverstärker 75 kann als steuerbare Spannungsquelle ausgenutzt werden.

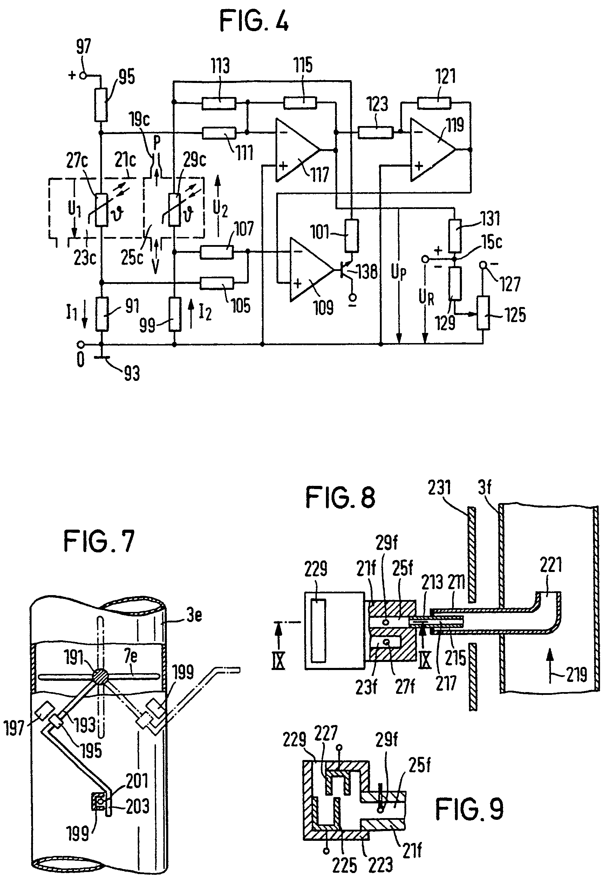

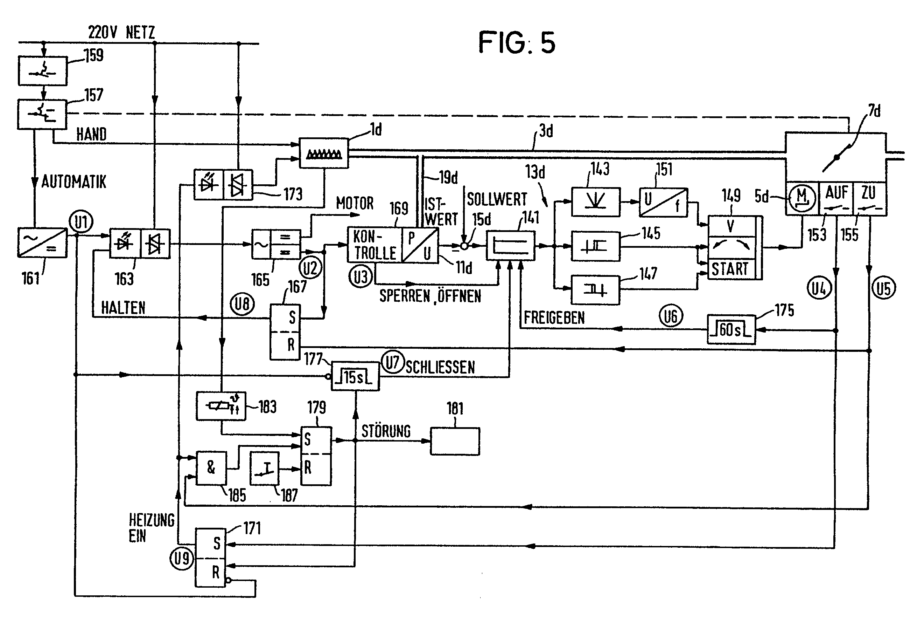

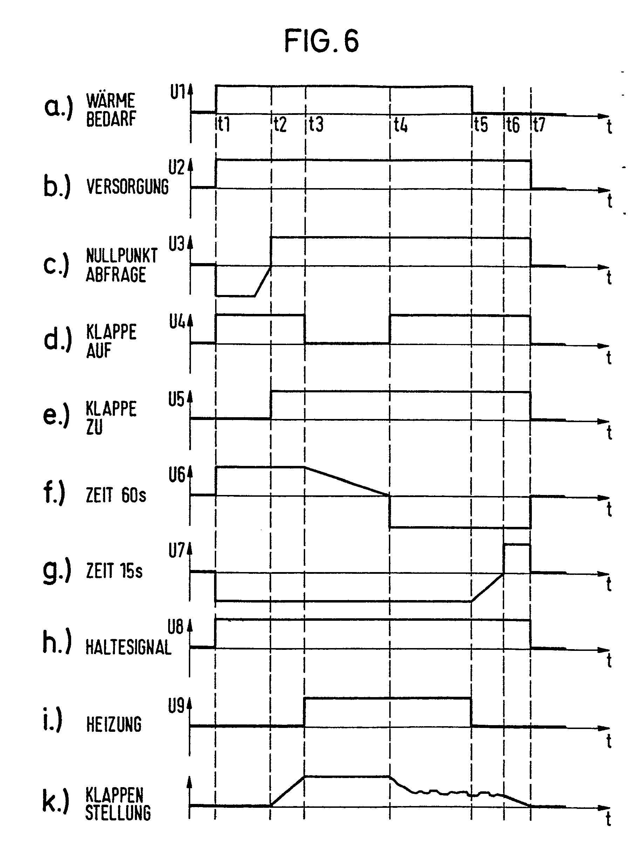

Figur 4 zeigt ein Schaltbild einer anderen Ausführungsform eines Sensors, der ähnlich dem Sensor der Figur 3 jedoch unter Verwendung von Heißleitern aufgebaut ist. Mit Figur 1 funktionsgleiche Teile sind mit den Bezugszahlen der Figur 1 und zusätzlich mit dem Buchstaben c bezeichnet. Zur Erläuterung dieser Teile wird auf die Beschreibung der Figur 1 Bezug genommen.

Der in der Bezugskammer 23c angeordnete Heißleiter 27c ist über einen den Strom $I_1$ in diesem Heißleiter erfassenden Shuntwiderstand 91 mit der nullpotentialführenden Masse 93 verbunden. Der masseferne Anschluß des Heißleiters 27c ist über einen Widerstand 95 an eine positive Konstantspannungsquelle 97 angeschlossen. Der Heißleiter 29c ist über einen den Strom $I_2$ durch diesen Heißleiter führenden Shuntwiderstand 99 ebenfalls mit Masse verbunden. An den massefernen Anschluß des Heißleiters 29c ist eine aus einem Widerstand l01 und einem Transistor 103 gebildete negative, steuerbare Spannungsquelle angeschlossen. Eine aus Widerständen 105, 107 bestehende Summierschaltung liefert, ähnlich der Summierschaltung 61, 63 der Figur 3 ein der Differenz der Spannungsabfälle an den Widerständen 91, 99 und damit der Differenz der Ströme $I_1$ und $I_2$ entsprechende Signal an den invertierenden Eingang eines den Transistor 103 steuernden Operationsverstärkers 109. Die Spannungsdifferenz zwischen den massefernen Anschlüssen der Heißleiter 27c, 29c wird analog zur Schaltung der Figur 3 von einer aus zwei Widerständen 111, 113 bestehenden Summierschaltung erfaßt. Ein mit seinem invertierenden Eingang an die Summierschaltung angeschlossener, mittels eines Widerstands 115 zum invertierenden Eingang rückgekoppelter Operationsverstärker 117 liefert an seinem Ausgang das dem Istwert des Schornsteinzugs proportionale Signal $U_p$. Der nicht invertierende Eingang des Operationsverstärkers 117 ist mit Masse verbunden. Der Ausgang des Operationsverstärkers 117 liefert über einen invertierenden Verstärker 119 ein Bezugspotential an den nicht invertierenden Eingang des Operationsverstärkers 109, welches den Ausgangspegel dieses Operationsverstärkers abhängig von der Spannungsdifferenz an den massefernen Anschlüssen der Heißleiter 27c, 29c steuert. Der Verstärkungsfaktor des invertierenden Verstärkers 119 ist in üblicher Weise durch einen vom Ausgang zum invertierenden Eingang führenden Widerstand 121 und einen den Ausgang des Operationsverstärkers 117 mit dem invertierenden Eingang verbindenden Serienwiderstand 123 festgelegt. Das Verhältnis der Widerstände 121, 123 und damit der Verstärkungsfaktor ist so gewählt, daß der Spannungsabfall $U_2$ am Heißleiter 29c in gleichem Maß steigt, wie die Spannung an dem Widerstand 99 und damit der Strom $I_2$ durch Heißleiter 29c. Entsprechen der Schaltung der Fig. 3 wird hierdurch das Verhältnis $U_2$ zu $I_2$ konstant und gleich dem Verhältnis $U_1$ zu $I_1$ des Heißleiters 27c geregelt. Auf diese Weise wird auch hier erreicht, daß die Temperaturen der Heißleiter 27c, 29c stets gleich groß sind, so daß sich Änderungen der Umgebungslufttemperatur nicht auswirken können und die Nullpunktdrift des Sensors gering bleibt.

Bei der vorstehend erläuterten Schaltung sind die Widerstände 91 und 99, die Widerstände 111 und 113 sowie die Widerstände 105 und 107 gleich groß. Das Bezugspotential am nicht invertierenden Eingang des Operationsverstärkers 109 kann auch durch andere Maßnahmen als durch Einstellen der Verstärkung des Verstärkers 119 variiert werden, beispielsweise durch eine Potentiometerschaltung. Auch in der Schaltung der Figur 4 sind die Operationsverstärker 109, 117, 119 bevorzugt sowohl an positive als auch negative Betriebsspannungen angeschlossen, so daß deren Ausgangsspannungen sowohl positive als auch negative Werte annehmen können. Die steuerbare Spannungsquelle 101, 103 kann dann gegebenenfalls entfallen.

Die vorstehend erläuterte Schaltung ist so bemessen, daß die Ströme $I_1$ und $I_2$ und die Spannungen $U_1$ und $U_2$ bei fehlendem Schorn-

steinzug gleich sind, womit auch die Temperaturen der Heißleiter 27c, 29c gleich sind. Wird der Heißleiter 29c bei Vorhandensein von Schornsteinzug gekühlt, so erhöht sich sein Widerstand und der Strom $I_2$ nimmt ab. Der Operationsverstärker 109 erhöht daraufhin die Spannung am massefernen Anschluß des Heißleiters 29c, womit der Strom $I_2$ auf einen dem Strom $I_1$ gleichen Wert zurückgeführt wird. Die Spannungserhöhung ist so justiert, daß die Spannung $U_2$ gleich der Spannung $U_1$ wird.

Auch die Schaltung der Figur 4 liefert ein die Regelabweichung repräsentierendes Fehlersignal $U_R$ abhängig von einem an einem Potentiometer 125 eingestellten elektrischen Sollsignal. Das Potentiometer 125 ist zwischen Masse und eine negative Spannungsquelle 127 geschaltet und liefert das Sollsignal mit bezogen auf das Istsignal invertiertem Pegel über einen Widerstand 129 an den das Fehlersignal bildenden Summationspunkt 15c. Das Istsignal $U_p$ wird dem Summationspunkt 15c über einen Widerstand 131 in nicht invertierter Form zugeführt.

Bei den vorstehend anhand der Figuren 2 bis 4 erläuterten Sensorschaltungen sind die Ströme und Spannungen durch die temperaturabhängigen Widerstandselement so bemessen, daß sich die Widerstandselemente auf eine Temperatur von etwa 120°C erwärmen. Hierdurch wird die Nullpunktskonstanz verbessert, da sich an den Widerstandselementen kein Kondenswasser bilden kann.

Figur 5 zeigt Einzelheiten einer Feuerstätten-Steuerung, die für eine betriebssichere Arbeitsweise der vorangegangen erläuterten Abgaszugregelschaltung sorgt. Gleichwirkende Teile sind mit den Bezugszahlen der Figur 1 vermehrt um den Buchstaben d bezeichnet. Zur Erläuterung des Aufbaus und der Wirkungsweise wird auf die Beschreibung der Figur 1 Bezug genommen.

Die Regelschaltung erfaßt den Zug im Abgasrohr 3d mit Hilfe des über das Zuluftrohr 19d angekoppelten Sensors 11d und erzeugt abhängig von dem Istwertsignal des Sensors 11d und einem Sollwertsignal in der Vergleicherschaltung 15d ein die Differenz dieser Signale entsprechendes Fehlersignal. Der Regler 13d ist als Dreipunktregler ausgebildet und umfaßt einen steuerbaren Regelverstärker 141 mit PI-Charakteristik, an den eine Betragsbildnerstufe 143, ein hysteresebehafteter Komparator 145 für eine obere Regelgrenze und ein hysteresebehafteter Komparator 147 für eine untere Regelgrenze angeschlossen sind. Der die Abgasklappe 7d stellende Motor 5d ist als Schrittmotor mit einer Schrittweite von beispielsweise 1,8° ausgebildet und wird über eine Schrittmotor-Treiberschaltung 149 mit einer durch das Signal der Betragsbildnerstufe 143 betragsmäßig bestimmten Geschwindigkeit und einer durch die Komparatoren 145, 147 festgelegten Drehrichtung angetrieben. Die Betragsbildnerstufe 143 ist hierzu über einen Spannung-Frequenz-Umformer 151 an die Schrittmotor-Treiberschaltung angeschlossen. Das von dem Schrittmotor 5d erzeugte Haltemoment genügt, um in Verbindung mit der

Regelschaltung ungewolltes Verdrehen der Abgasklappe 7d zu verhindern. Aufgrund der hinreichend kleinen Wahl der Schrittweite des Schrittmotors 5d ist kein Übersetzungsgetriebe zwischen Motor und Abgasklappe erforderlich.

Die Abgasklappe 7d betätigt in nachstehend noch näher erläuterter Weise in ihrer vollständig geöffneten Stellung einen Auf-Endschalter 153 und in ihrer vollständig das Abgasrohr 3d sperrenden Stellung einen Zu-Endschalter 155. Die Signale der Endschalter 153, 155 werden zur Steuerung des Betriebs der Feuerstätte ld und zur Überwachung ihrer Betriebsfunktion ausgenutzt. Die Feuerstätte ld kann sowohl im Automatikbetrieb über die Regelschaltung als auch bei in der vollständig geöffneten Stellung verriegelter Abgasklappe 7d von Hand eingestellt werden. Zum Umschalten zwischen Automatikbetrieb und Handbetrieb ist ein mit der Abgasklappe 7d gekuppelter Umschalter 157 vorgesehen, über den Wärmebedarfssignale eines Thermostaten 159 oder dergleichen entsprechend der gewählten Betriebsart entweder direkt der Feuerstätte ld zugeführt oder zur Aktivierung der Regelschaltung herangezogen werden. Im Automatikbetrieb erzeugt das aus der 220 Volt-Netzspannung abgeleitete Wärmebedarfssignal über eine Gleichrichterschaltung 161 ein Gleichspannungs-Wärmebedarfssignal $U_1$, welches über einen der Netzentkoppelung dienenden Optokoppler-Triak 163 ein die Versorgungsspannung $U_2$ der Regelschaltung sowie des Schrittmotors 5d lieferndes Netzgerät 165 einschaltet. Die Spannung $U_2$ setzt ein Flip-Flop 167, welches daraufhin ein Haltesignal $U_8$ an den Optokoppler-Triak 163 abgibt und die Spannung $U_2$ aufrechterhält.

Die Spannung $U_2$ aktiviert eine Nullpunkt-Kontrollschaltung 169, die den Nullpunkt des Sensors 11d überprüft.

Die Nullpunkt-Kontrollschaltung 169 gibt hierzu ein Steuersignal $U_3$ an den Regelverstärker 141 ab, welches die Abgasklappe 7d in die geschlossene Stellung treibt, in welcher das Istwertsignal des Sensors 11d bei korrekter Arbeitsweise Null ist. Wird der Nullpunkt als korrekt bestätigt, so wechselt das Steuersignal $U_3$ auf einen die Abgasklappe in die vollständig geöffnete Stellung treibenden Wert. Das Signal $U_4$ des Auf-Endschalters 153 setzt daraufhin ein Flip-Flop 171, welches ein die Heizung einschaltendes Steuersignal $U_9$ über einen Optokoppler-Triak 173 an den Brenner der Feuerstätte ld abgibt. Das Signal $U_4$ des Auf-Endschalters 153 triggert weiterhin ein Zeitglied 175, welches nach Ablauf einer vorbestimmten Verzögerungszeit von z.B. 60 Sekunden ein die Regelschaltung zum Regeln freigebendes Freigabesignal $U_6$ erzeugt. Das Verzögerungsglied 175 stellt sicher, daß die Feuerstätte ld bei geöffneter Abgasklappe 7d voll in Betrieb genommen werden kann, bevor die Regelschaltung wirksam wird.

Mit Beendigung des Wärmebedarfssignals $U_1$ wird das Flip-Flop 171 rückgesetzt und über das die Heizung steuernde Signal $U_9$ der Brenner der Feuerstätte ld abgeschaltet. Das Wärmebedarfssi-

gnal $U_1$ triggert weiterhin mit seiner Rückflanke ein Zeitglied 177, welches nach Ablauf einer vorbestimmten Verzögerungszeit von z.B. 15 Sekunden ein die Abgasklappe in die vollständig geschlossene Stellung treibendes Signal $U_7$ an den Regelverstärker 141 abgibt. Durch die Verzögerung des Schließens der Abgasklappe 7d wird erreicht, daß nach dem Abschalten des Brenners die Abgase vollständig abziehen können, bevor die Abgasklappe 7d schließt. Bei geschlossener Abgasklappe gibt der Zu-Endschalter 155 ein Signal $U_5$ ab, welches das Flip-Flop 167 rücksetzt und das den Optokoppler 163 haltende Signal $U_8$ und damit die Stromversorgung der Regelschaltung abschaltet.

Die Feuerstättensteuerung reagiert auf Störungen des Betriebs durch Abschalten des Brenners. Ein im Störungsfall gesetztes Flip-Flop 179 erzeugt ein Abschaltsignal, welches seinerseits das Flip-Flop 171 rücksetzt und das die Heizung einschaltende Signal $U_9$ abschaltet. Das Flip-Flop 179 triggert darüber hinaus im Störungsfall das Zeitglied 177, welches über das Signal $U_7$ nach Ablauf der vorbestimmten Zeitspanne über die Regelschaltung 13d die Abgasklappe 7d schließt. An das Flip-Flop 179 ist darüber hinaus eine die Störung anzeigende Anzeigeeinrichtung 181 angeschlossen. Das Flip-Flop 179 wird von einer Strömungssicherung 183 gesetzt, die die Feuerstätte 1d während des Betriebs daraufhin überwacht, ob heiße Gase anders als über das Abgasrohr 3d austreten. Das Flip-Flop 179 wird ferner gesetzt, wenn ein Undglied 185 gleichzeitig das die Heizung einschaltende Signal $U_9$ und das die geschlossene Abgasklappe 7d repräsentierende Signal $U_5$ des Zu-Endschalters 155 erfaßt. Das Flip-Flop 179 kann nach Beheben der Störung über eine Taste 187 manuell rückgesetzt werden.

Die Figuren 6a bis i zeigen den zeitlichen Zusammenhang der vorstehend erwähnten Signale $U_1$ bis $U_9$. Fig. 6k zeigt zeitabhängig die Stellung der Abgasklappe 7d. Zum Zeitpunkt $t_1$ erscheint das Wärmebedarfssignal. Die Nullpunktabfrage ist zum Zeitpunkt $t_2$ mit korrektem Ergebnis beendet und die Abgasklappe 7d wird aus der geschlossenen Stellung bis zum Zeitpunkt $t_3$ in die geöffnete Stellung überführt. Zum Zeitpunkt $t_3$ wird die Heizung eingeschaltet und das Zeitglied 175 beginnt zu laufen. Zum Zeitpunkt $t_4$ gibt das Zeitglied 175 die Regelschaltung zur Abgasklappenregelung frei. Zum Zeitpunkt $t_5$ endet das Wärmebedarfssignal und der Brenner der Heizung wird abgeschaltet. Gleichzeitig wird das Zeitglied 177 getriggert, welches zum Zeitpunkt $t_6$ das die Regelschaltung zum Schließen der Abgasklappe 7d veranlassende Signal abgibt. Zum Zeitpunkt $t_7$ erreicht die Abgasklappe die vollständig geschlossene Stellung und der Zu-Endschalter 155 schaltet über das Flip-Flop 167 die Spannungsversorgung aus.

Figur 7 zeigt Einzelheiten einer in einem Abgasrohr 3e angeordneten Abgasklappe 7e, deren Welle 191 von einem nicht näher dargestellten Motor um 90° zwischen der in Figur 7 eingezeichneten, vollständig geschlossenen Stellung und einer strichpunktiert eingezeichneten, vollständig geöffneten Stellung geschwenkt wird. Außerhalb des Abgasrohrs ist an der Achse 191 ein Arm 193 befestigt, der im Abstand von der Achse 191 einen Permanentmagnet 195 trägt. Der Permanentmagnet 195 betätigt zwei in den beiden Endstellungen der Abgasklappe 7e bei 197 und 199 angeordnete magnetfeldempfindliche Endschalter, beispielsweise Reed-Schalter. Im Bereich der Endschalter 197, 199 können ferner Weicheisenplatten angeordnet sein, an welchen der Magnet 195 und damit die Abgasklappe in den Endstellungen verrastet.

Der mit dem Abgasrohr 3a verbundene Sensor ist in Figur 7 bei 199 dargestellt. Seine in Schwenkrichtung der Achse 191 von der geschlossenen zur offenen Stellung hin weisende Einlaßöffnung 201 wird von einer an dem Arm 193 angebrachten Fahne 203 in der geschlossenen Stellung der Abgasklappe 7e abgedeckt. Die Fahne 203 gibt die Einlaßöffnung 201 bei geöffneter Abgasklappe 7e frei. Durch Verschließen der Einlaßöffnung 201 bei geschlossener Abgasklappe 7e wird verhindert, daß ein stets vorhandener Restzug im Abgasrohr 3a auch während der Betriebspausen der Feuerstätte Luft durch den Sensor saugt und zu einer erhöhten, die Nullpunktsdrift erhöhenden Verschmutzung des Sensors beiträgt. Darüber hinaus läßt sich bei verschlossener Einlaßöffnung die anhand der Figur 5 erläuterte Nullpunktsüberprüfung des Sensors genauer durchführen.

Die Figuren 8 und 9 zeigen Einzelheiten des Sensors und des ihn mit dem Abgasrohr verbindenden Zuluftrohrs. Das Zuluftrohr besteht aus zwei koaxial ineinandergreifenden Rohren 211, 213 aus einem Wärme schlecht leitenden Material, beispielsweise Keramik, die sich über eine gewisse Länge überlappen und zwischen sich einen Ringraum 215 bilden, der an der dem Abgasrohr 3f abgewandten Seite bei 217 abgedichtet ist. Das durchmessergrößere Rohr 211 ragt quer zur Strömungsrichtung 219 der Abgase in das Abgasrohr 3f und hat auf der in Strömungsrichtung 219 weisenden Seite eine Öffnung 221. Das durchmesserkleinere Rohr 213 mündet in die in einem Block 21f aus gut leitendem Material bestehende Meßkammer 25f, in der das temperaturabhängige Widerstandelement 29f angeordnet ist. Die das temperaturabhängige Widerstandselement 27f enthaltende Bezugskammer 23f ist unterhalb der Meßkammer 25f angeordnet. Beide Kammern münden in einem Gehäuse 223 eines elektrostatischen Filters. Das Gehäuse enthält zwei kammartig ineinandergreifende oder zumindest gegeneinander gerichtete Elektroden 225, 227 und ist den Kammern 223, 225 diametral gegenüberliegend bei 229 zur Umgebungsluft hin offen. Das elektrostatische Filter, dessen Elektroden 225, 227 an eine Gleichspannungsquelle von beispielsweise 500 Volt angeschlossen sind, verhindert das Verschmutzen der Widerstandselemente 27f, 29f durch die eingesaugte Zuluft. Zwischen dem Block 21f und dem Abgasrohr 3f ist ferner ein Wärmeschutzschild 231 vorgesehen.

Der Ringraum 215 sammelt Verunreinigungen, die von der Abgasseite in das Rohr 211 eindringen.

Mit der beschriebenen Abzugsregelschaltung und Feuerstättensteuerung erzielt man die folgenden Vorteile:

1. Die Feuerstätte arbeitet immer mit einem optimalen Wirkungsgrad, da der Zug konstant ist und der jeweils eingestellten Heizleistung angepaßt ist.

2. Um die Abgasverluste und die durch die Nebenluft verursachte Kühlung des Heizraumes zu reduzieren, kann die Strömungssicherung der Feuerungsstätte auf einen sehr kleinen Querschnitt verringert werden, da bei eventuellen Störungen die Sicherheitseinrichtungen ansprechen.

3. Die Konstruktion der Feuerungsstätte vereinfacht sich, wenn anstelle eines sehr unterschiedlichen Kaminzuges von z.B. 5 bis 80 Pascal ein konstanter Zug gewährleistet ist.

4. Die Meßwerterfassungsschaltung arbeitet ohne Nullpunktsdrift und sehr zuverlässig, was man z.B. mit einer Druckmeßdose oder einer Lambdasonde nur mit großem Aufwand und bei mindestens jährlicher Wartung erreichen kann.

**Patentansprüche**

1. Einrichtung zum Regeln des Zugs im Zuluftweg oder im Abgasweg einer Feuerstätte, insbesondere einer Gasfeuerstätte, mit einem von einem Motor (5) angetriebenen Stellorgan (7), insbesondere einer Stellklappe im Zuluft- bzw. Abgasweg (3), einem auf den Druck im Zuluft- bzw. Abgasweg (3) ansprechenden Sensor (11) und einer an den Sensor (11) und den Motor (5) angeschlossenen, den Druck im Zuluft- bzw. Abgasweg (3) auf einem vorgegebenen Wert haltenden Regelschaltung (13), die Vergleicherschaltungen aufweist und in dem Motor (5) treibendes Fehlersignal erzeugt, wobei der Sensor (11) zwei außerhalb des Zuluft-bzw. Abgaswegs (3) zur Umgebungsluft offen angeordnete, temperaturabhängige Widerstandselemente (27, 29) aufweist, und die Regelschaltung (13) abhängig von der Temperaturdifferenz der Widerstandselemente (27, 29) über den Motor (5) das Stellorgan (7) und damit den Druck (p) so einstellt, daß im ausgeregelten Zustand die Widerstandselemente (27, 29) gleich große Wider standswerte besitzen, dadurch gekennzeichnet, daß die Widerstandselemente (27, 29) in offenen Kammern (23, 25) angeordnet sind, daß eine erste der beiden Kammern (23) ein ruhendes Luftvolumen enthält und die zweite Kammer (25) über einen Kanal (19) mit dem Zuluft- bzw. Abgasweg (3) verbunden ist, so daß sie von einer vom Druck im Zuluft- bzw. Abgasweg (3) abhängigen Zuluftströmung durchströmt wird und daß der Stromzweig des in der ersten Kammer (23b, 23c) angeordneten Widerstandselements (27b, 27c) an eine Speisespannungsquelle (57; 97) fester Spannung und der Stromzweig des in der zweiten Kammer (25b, 25c) angeordneten Widerstandselements (29b, 29c) an eine steuerbare Speisespannungsquelle (63; 138) angeschlossen ist, daß die Regelschaltung eine sowohl auf die Ströme in den beiden Stromzweigen als auch die Spannungen an den beiden Widerstandselementen (27b, 29b; 27c, 29c) ansprechende Steuerschaltung (77, 79; 119, 121, 123) aufweist, die die steuerbare Speisespannungsquelle (63; 138) so steuert, daß das Verhältnis der an dem Widerstandselement anliegenden Spannung zum Strom durch das Widerstandselement für beide Widerstandselemente gleich ist, daß jeder der beiden Stromzweige einen in Serie zum Widerstandselement (27b, 29b; 27c, 29c) zwischen den das Bezugspotential führenden Schaltungspunkt (53; 93) und das Widerstandselement (27b, 29b; 27c, 29c) geschalteten Serienwiderstand (51, 59; 91, 99) aufweist, daß die Verbindungspunkte der Widerstandselemente (27b, 29b; 27c, 29c) und die Serienwiderstände (51, 59; 91, 99) mit einer ersten Vergleicherschaltung (65; 109) verbunden sind, die ein der Differenz der Ströme in den beiden Stromzweigen entsprechendes Ausgangssignal liefert, daß die den Serienwiderständen (51, 59; 91, 99) abgewandten Anschlüsse der Widerstandselemente (27b, 29b; 27c, 29c) mit einer zweiten Vergleicherschaltung (75; 117) verbunden sind, die ein der Differenz der Spannungen an diesen Anschlüssen entsprechendes Ausgangssignal liefert, daß eine der beiden Vergleicherschaltungen (75; 109) ihr Ausgangssignal mit vom Ausgangssignal der anderen Vergleicherschaltung (65; 117) abhängiger Amplitude erzeugt und die steuerbare Speisespannungsquelle (63; 138) steuert und daß das den Druck im Zuluft- bzw. Abgasweg repräsentierende Signal abhängig vom Ausgangssignal der jeweils anderen Vergleicherschaltung (65; 117) erzeugt wird.

2. Einrichtung nach Anspruch 1, dadurch gekennzeichnet, daß die thermischen Widerstandselemente (27b, 29b) als Kaltleiter ausgebildet sind und daß das Ausgangssignal der zweiten Vergleicherschaltung (75) vom Ausgangssignal der ersten Vergleicherschaltung (65) abhängig ist.

3. Einrichtung nach Anspruch 1, dadurch gekennzeichnet, daß die thermischen Widerstandselemente (27c, 29c) als Heißleiter ausgebildet sind und daß das Ausgangssignal der ersten Vergleicherschaltung (109) vom Ausgangssignal der zweiten Vergleicherschaltung (117) abhängig ist.

4. Einrichtung nach Anspruch 1, dadurch gekennzeichnet, daß die Speisespannungsquellen (57, 63; 97, 138), bezogen auf das Bezugspotential an dem beiden Stromzweigen gemeinsamen Schaltungspunkt (53; 93) entgegengesetzte Polarität haben und daß beide Vergleicherschaltungen jeweils einen Differenzverstärker (65, 75; 109, 117) aufweisen, der mit seinem invertierenden Eingang über eine Widerstands-Summierschaltung (61, 63, 71, 73; 105, 107, 111, 113) an einander entsprechende Schaltungspunkte der beiden Stromzweige angeschlossen ist.

5. Einrichtung nach Anspruch 1 und 2 dadurch gekennzeichnet, daß der Ausgang des Differenzverstärkers (65) der ersten Vergleicherschaltung an den nichtinvertierenden Eingang des Differenzverstärkers (75) der zweiten Vergleicherschaltung angekoppelt ist.

6. Einrichtung nach Anspruch 4, dadurch gekennzeichnet, daß der Ausgang des Differenzverstärkers (117) der zweiten Vergleicherschaltung über einen invertierenden Verstärker (119) an den nichtinvertierenden Eingang des Differenzverstärkers (109) der ersten Vergleicherschaltung angekoppelt ist.

7. Einrichtung nach Anspruch 5 oder 6 dadurch gekennzeichnet, daß der Verstärkungsfaktor des an den nichtinvertierenden Eingang gekoppelten Differenzverstärkers (65; 117) so bemessen ist, daß sich die Amplitude des die steuerbare Speisespannungsquelle steuernden Ausgangssignals proportional zur Spannung an dem Serienwiderstand ändert.

8. Einrichtung nach einem der Ansprüche 1 bis 7, dadurch gekennzeichnet, daß die Regelschaltung (13) das den Motor (5) treibende Fehlersignal abhängig von einem elektrischen Sollwertsignal erzeugt.

9. Einrichtung nach Anspruch 8 dadurch gekennzeichnet, daß das Sollwertsignal abhängig von einem die Brennerleistung der Feuerstätte vorgebenden Steuersignal erzeugt wird.

10. Einrichtung nach einem der Ansprüche 1 bis 9 dadurch gekennzeichnet, daß der Strom durch die temperaturabhängigen Widerstände (27, 29) so bemessen ist, daß sich diese auf eine Temperatur von wenigstens 60°C, vorzugsweise mehr als 100°C, erwärmen.

11. Einrichtung nach einem der Ansprüche 1 bis 10, dadurch gekennzeichnet, daß die beiden die temperaturabhängigen Widerstandselemente (27, 29) aufnehmenden Kammern (23, 25) in einem Block (21) aus einem die Wärme gut leitenden Material, insbesondere Metall ausgespart sind.

12. Einrichtung nach einem der Ansprüche 1 bis 11, dadurch gekennzeichnet, daß der die zweite Kammer (25) mit dem Zuluft- bzw. Abgasweg verbindende Kanal durch ein Rohr (19) aus einem die Wärme schlecht leitenden Material, insbesondere Keramik, gebildet ist.

13. Einrichtung nach einem der Ansprüche 1 bis 12, dadurch gekennzeichnet, daß der die zweite Kammer mit dem Zuluft- bzw. Abgasweg verbindende Kanal (19) durch zwei in einem Überlappungsbereich koaxial ineinandergreifende Rohre (211, 213) gebildet ist, von denen ein erstes Rohr (211) über den Überlappungsbereich hinaus quer zur Strömungsrichtung des Zuluft- bzw. Abgaswegs (3f) in den Zuluft- bzw. Abgasweg (3f) ragt und an seinem innerhalb des Zuluft- bzw. Abgaswegs (3f) gelegenen Ende eine in Strömungsrichtung weisende Öffnung (221) hat und von denen das zweite Rohr (213) mit der zweiten Kammer (25f) verbunden ist und auf der der Öffnung (221) des ersten Rohrs (211) abgewandten Seite des Überlappungsbereichs zum ersten Rohr (211) hin abgedichtet ist.

14. Einrichtung nach einem der Ansprüche 1 bis 13, dadurch gekennzeichnet, daß das Stellorgan (7e) mit einer Klappe (203) gekuppelt ist, die in der den Zuluft- bzw. Abgasweg (3e) sperrenden Stellung des Stellorgangs (7e) die Einlaßöffnungen (201) der beiden Kammern sperrt.

15. Einrichtung nach einem der Ansprüche 1 bis 14, dadurch gekennzeichnet, daß vor den die beiden Kammern (23f, 25f) mit der Umgebungsluft verbindenden Öffnungen ein Staubfilter (225, 227), insbesondere ein elektrostatisches Filter, angeordnet ist.

16. Einrichtung nach einem der Ansprüche 1 bis 15, dadurch gekennzeichnet, daß zwei auf die Stellung des Stellorgans (7d) ansprechende Endschalter (153, 155), vorzugsweise zwei durch einen mit dem Stellorgan gekuppelten Magneten gesteuerte, magnetfeldempfindliche Schalter vorgesehen sind, von denen ein erster Endschalter (153) bei vollständig geöffnetem Zuluft- bzw. Abgasweg (3d) und ein zweiter Endschalter (155) bei vollständig gesperrtem Zuluft- bzw. Abgasweg (3d) anspricht, daß eine von den beiden Endschaltern (153, 155) gesteuerte Feuerstättensteuerung auf ein Wärmebedarfs-Steuersignal (U1), insbesondere eine Thermostaten (159), hin das Stellorgan (7d) in die Sperrstellung treibt und eine Sensor-Nullpunkt-Kontrollschaltung (169) aktiviert, die bei gesperrtem Zuluft- bzw. Abgasweg (3d) Nullpunktsabweichungen des Sensor-Ausgangssignals erfaßt und bei korrektem Nullpunkt die Regelschaltung (13d) zum druckabhängigen Regeln der Stellung des Sperrorgans (7d) freigibt.

17. Einrichtung nach Anspruch 16, dadurch gekennzeichnet, daß die Sensor-Nullpunkt-Kontrollschaltung (169) ein das Sperrorgan (7d) vollständig öffnendes und den Brenner der Feuerstätte einschaltendes Signal (U3) erzeugt und daß der erste Endschalter (153) die Freigabe der Regelschaltung (13d) über ein die Freigabe verzögerndes Zeitglied (175) steuert.

18. Einrichtung nach Anspruch 16 oder 17 dadurch gekennzeichnet, daß der Brenner der Feuerstätte (1d) bei Beendigung des Wärmebedarfssignals (U1) sofort und die Regelschaltung (13d) über ein Zeitverzögerungsglied (177) abschaltbar ist.

19. Einrichtung nach einem der Ansprüche 16 bis 18, dadurch gekennzeichnet, daß eine auf einen Abgas-Überströmmelder (183) und/oder auf ein das Ansprechen des zweiten Endschalters (155) bei gleichzeitig eingeschaltetem Brenner erfassendes Gatter (185) ansprechende Störungsmeldeschaltung (181) ein den Brenner abschaltendes, manuell rücksetzbares Speicherglied (179) setzt und die Störung optisch und/oder akustisch anzeigt.

20. Einrichtung nach einem der Ansprüche 16 bis 19, dadurch gekennzeichnet, daß die Stromversorgung der Feuerstätte (1d) über einen steuerbaren Schalter (163) abhängig von dem Wärmebedarfssignal (U1) einschaltbar und abhängig von dem zweiten Endschalter (155) ausschaltbar ist.

## Revendications

1. Dispositif pour régler le tirage dans l'arrivée d'air frais ou dans la conduite de dégagement du gaz de fumée pour une chaudière, en particulier d'une chaudière à gaz, avec un organe de réglage (7) entraîné par un moteur (5), en particulier un clapet de réglage situé dans l'arrivée d'air frais ou dans la conduite de dégagement du gaz de fumée (3), avec un capteur (11) réagissant à la pression dans l'arrivée d'air frais ou dans la conduite de dégagement du gaz de fumée (3), et un circuit de réglage (13) raccordé au capteur (11) et au moteur (5), maintenant à une valeur prédéterminée la pression dans l'arrivée d'air frais ou dans la conduite de dégagement du gaz de fumée (3), comportant des circuits comparateurs et produisant un signal d'erreur agissant sur le moteur (5), le capteur (11) présentant deux éléments résistants (27, 29) sensibles à la température, situés endehors de l'arrivée d'air frais ou de la conduite de dégagement du gaz de fumée (3), ouverts à l'air ambiant, et le circuit de réglage (13) réglant l'organe de réglage (7) et ainsi la pression (P) en fonction de la différence de température des éléments résistants (27, 29), de façon qu'à l'état réglé, les éléments résistants (27, 29) présentent des valeurs de résistance identiques, caractérisé en ce que les éléments résistants (27, 29) sont disposés dans des chambres ouvertes (23, 25), en ce que la première (23) des deux chambres contient un volume d'air au repos et en ce que la deuxième chambre (25) est reliée à l'arrivée d'air frais ou à la conduite de dégagement du gaz de fumée (3) par l'intermédiaire d'un canal (19), de façon qu'elle soit parcourue par un écoulement d'air frais dépendant de la pression régnant dans l'arrivée d'air frais ou dans la conduite de dégagement du gaz de fumée (3), et en ce que la branche de courant de l'élément résistant (27b, 27c) qui est disposé dans la première, chambre (23b, 23c) est raccordé à une source de tension d'alimentation (57; 97) à tension fixe et que la branche de courant de l'élément résistant (29b, 29c) qui est disposé dans la deuxième chambre (25b, 25c) est raccordé à une source de tension d'alimentation (63; 138) à tension commandable, en ce que le circuit de réglage présente un circuit de commande (77, 79; 119, 121, 123) réagissant tant aux intensités passant dans les deux branches de courant qu'également aux tensions appliquées aux deux éléments résistants (27b, 29b; 27c, 29c), le circuit de commande (77, 79; 119, 121, 123) commandant la source de tension d'alimentation commandable (63; 138) de façon que le rapport entre la tension appliquée à l'élément résistant et l'intensité passant dans l'élément résistant soit identique pour les deux éléments résistants, en ce que chacune des deux branches de courant présente une résistance série (51, 59; 91, 99) branchée en série vis-à-vis de l'élément résistant (27b, 29b; 27c, 29c), entre le point de branchement laissant passer le potentiel de référence et l'élément résistant (27b, 29b; 27c, 29c), en ce que les points de liaison des éléments résistants (27b, 29b; 27c, 29c) et les résistances série (51, 59; 91, 99) sont reliés à un premier circuit de comparaison (65; 109) qui produit un signal de sortie correspondant à la différence des intensités s'écoulant dans les deux branches de courant, en ce que les raccordements des éléments résistants (27b, 29b; 27c, 29c) qui sont opposés aux résistances série (51, 59; 91, 99) sont reliés à un deuxième circuit de comparaison (75; 117) qui produit un signal correspondant à la différence des tensions existant à ces raccordements, en ce que l'un des deux circuits de comparaison (75; 109) produit son signal de sortie avec une amplitude qui est fonction du signal de sortie de l'autre circuit de comparaison (65; 117) et commande la source de tension d'alimentation commandable (63; 138) et en ce que le signal représentant la pression dans l'arrivée d'air frais ou dans la conduite de dégagement du gaz de fumée (3) est produit en fonction du signal de sortie de l'autre circuit de comparaison (65; 117).

2. Dispositif selon la revendication 1, caractérisé en ce que les éléments résistant (27b, 29b) thermiques sont réalisés sous forme de thermistors PTC et que le signal de sortie du deuxième circuit de comparaison (75) est fonction du signal de sortie du premier circuit de comparaison (65).

3. Dispositif selon la revendication 1, caractérisé en ce que les éléments résistant (27c, 29c) thermiques sont réalisés sous forme de thermistors NTC et que le signal de sortie du premier circuit de comparaison (109) est fonction du signal de sortie du deuxième circuit de comparaison (117).

4. Dispositif selon la revendication 1, caractérisé en ce que les sources de tension d'alimentation (57, 63; 97, 138), présentent une polarité opposée, par rapport au potentiel de référence, au point de branchement (53; 93) commun aux deux branches de courant, et en ce que les deux circuits de comparaison présentent chacun un amplificateur différenciateur (65, 75; 109, 117) qui est raccordé par son entrée inversive, par l'intermédiaire d'un circuit sommateur à résistance (61, 63, 71, 73; 105, 107, 111, 113), à des points de branchement correspondant entre eux des deux branches de courant.

5. Dispositif selon la revendication 1 et 2, caractérisé en ce que la sortie de l'amplificateur différenciateur (65) du premier circuit de comparaison est couplé à l'entrée non inversive de l'amplificateur différenciateur (75) du deuxième circuit de comparaison.

6. Dispositif selon la revendication 4, caractérisé en ce que la sortie de l'amplificateur différenciateur (117) du deuxième circuit de comparaison est couplé, par l'intermédiaire d'un amplificateur inversif (119) à l'entrée non inversive de l'amplificateur différenciateur (109) du premier circuit de comparaison.

7. Dispositif selon la revendication 5 ou 6, caractérisé en ce que le facteur d'amplification de l'amplificateur différenciateur (65; 117) couplé à l'entrée non inversive est d'une valeur telle que l'amplitude du signal de sortie commandant la source de tension d'alimentation commandable varie proportionnellement à la tension sur la résistance série.

8. Dispositif selon l'une des revendications 1 à 7, caractérisé en ce que le circuit de réglage (13) produit le signal d'erreur agissant sur le moteur (5) en fonction d'un signal électrique de valeur de consigne.

9. Dispositif selon la revendication 8, caractérisé en ce que le signal de valeur de consigne est produit en fonction d'un signal de commande prédéterminant la puissance de chauffe de la chaudière.

10. Dispositif selon l'une des revendications 1 à 9, caractérisé en ce que le courant passant dans les résistances (27, 29) variant en fonction de la température est d'une valeur telle que ces résistances sont chauffées à une température d'au moins 60°C, de préférence de plus de 100°C.

11. Dispositif selon l'une des revendications 1 à 10, caractérisé en ce que les deux chambres (23, 25) logeant les deux éléments résistants (27, 29) variant en fonction de la température sont ménagées dans un bloc (21) constitué d'un matériau bon conducteur de la chaleur, en particulier en métal.

12. Dispositif selon l'une des revendications 1 à 11, caractérisé en ce que le canal reliant la deuxième chambre (25) à l'arrivée d'air frais ou à la conduite de dégagement du gaz de fumée est formé d'un matériau mauvais conducteur de la chaleur, en particulier en céramique.

13. Dispositif selon l'une des revendications 1 à 12, caractérisé en ce que le canal (19) reliant la deuxième chambre à l'arrivée d'air frais ou à la conduite de dégagement du gaz de fumée est formé par deux tubes (211, 213) s'insérant coaxialement l'un dans l'autre dans une zone de chevauchement, dont un premier tube (211) pénètre dans l'arrivée d'air frais ou dans la conduite de dégagement du gaz de fumée (3f), au-dessus de la zone de chevauchement, transversalement à l'arrivée d'air frais ou à la conduite de dégagement du gaz de fumée (3f), et présente à son extrémité située à l'intérieur de l'arrivée d'air frais ou de la conduite de dégagement du gaz de fumée (3f) un orifice (221) tourné dans le sens de l'écoulement et dont le deuxième tube (213) est relié à la deuxième chambre (25f) et isolé de manière étanche sur la face de la zone de chevauchement, par rapport au premier tube (211), qui est opposée à l'orifice (221) du premier tube.

14. Dispositif selon l'une des revendications 1 à 13, caractérisé en ce que l'organe de réglage (7e) est accouplé à un clapet (203) qui obture les orifices d'entrée (201) des deux chambres lorsque l'organe de réglage (7e) est en position d'obturation de l'arrivée d'air frais ou de la conduite de dégagement du gaz de fumée (3e).

15. Dispositif selon l'une des revendications 1 à 14, caractérisé en ce qu'un filtre à poussières (225, 227), en particulier un filtre électrostatique, est disposé en amont des ouvertures reliant les deux chambres (23f, 25f) à l'atmosphère.

16. Dispositif selon l'une des revendications 1 à 15, caractérisé en ce qu'il est prévu deux interrupteurs de fin de course (153, 155) réagissant à la position de l'organe de réglage (7d), de préférence deux interrupteurs sensibles au champ magnétique, commandés par un aimant couplé à l'organe de réglage, interrupteurs de fin de course dont le premier (153) réagit lors de la pleine ouverture de l'arrivée d'air frais ou de la conduite de dégagement du gaz de fumée (3d) et le second (155) réagit lors de leur fermeture complète, en ce qu'une commande de chaudière commandée par les deux interrupteurs (153, 155) actionne, sur un signal de commande de besoin de chauffe (U1), en particulier venant d'un thermostat (159), l'organe de réglage (7d) dans la position d'obturation et active un circuit de contrôle (169) de point zéro de capteur qui mesure les écarts par rapport au point zéro du signal de sortie du capteur lorsque l'arrivée d'air frais ou la conduite de dégagement du gaz de fumée (3d) est obturée et qui libère le circuit de réglage (13d) lorsque le point zéro est correct, en vue d'une régulation, en fonction de la pression, de la position de l'organe d'obturation (7d).

17. Dispositif selon la revendication 16, caractérisé en ce que le circuit de contrôle (169) de point zéro de capteur produit un signal (U3) provoquant la pleine ouverture de l'organe d'obturation (7d) et la mise en service du brûleur de la chaudière et en ce que le premier interrupteur de fin de course (153) commande, par l'intermédiaire d'un organe de temporisation (175) retardant la libération, la libération du circuit de régulation (13d).

18. Dispositif selon la revendication 16 ou 17, caractérisé en ce que le brûleur de la chaudière (1d) est susceptible d'être mis hors service, aussitôt après disparition du signal de besoin de chaleur (U1) et que le circuit de réglage (13d) est susceptible d'être mis hors service par l'intermédiaire d'un organe de temporisation (177).

19. Dispositif selon l'une des revendications 16 à 18 caractérisé en ce qu'un circuit d'information de panne (181) réagissant à un organe d'information de surintensité de gaz de fumée (183) et/ou à une "porte" (185) détectant la réaction du deuxième interrupteur de fin de course (155) le brûleur étant simultanément en service, positionne un organe à mémoire (179), qui peut être remis en position initiale manuellement, en mettant le brûleur hors service, et affiche la panne par voie optique et/ou acoustique.

20. Dispositif selon l'une des revendications 16 à 19, caractérisé en ce que l'alimentation électrique de la chaudière (1d) est susceptible d'être mise en service par l'intermédiaire d'un interrupteur (163) commandable, en fonction du signal de besoin de chaleur (U1), et d'être mise hors service en fonction du deuxième interrupteur de fin de course (155).

**Claims**

1. Apparatus for regulating the drawing power in the air inlet flue or in the exhaust gas outlet flue of a fireplace, more especially a gas fireplace, having an adjusting means (7), which is driven by a motor (5), more especially an adjustable flap in the air inlet or gas outlet (3), a sensor (11), which responds to the pressure in the air inlet or gas outlet (3), and a regulating circuit (13), which is connected to the sensor (11) and the motor (5) and maintains the pressure in the air inlet or gas outlet (3) at a prescribed value, said circuit having comparator circuits and producing a fault signal which drives the motor (5), wherein the sensor (11) has two temperature-dependent resistor elements (27, 29), which are disposed externally of the air inlet or gas outlet (3) and are open relative to ambient air, and, in dependence on the temperature difference between the resistor elements (27, 29), the regulating circuit (13) sets the adjusting means (7), and hence the pressure (p), in such a manner, via the motor (5), that, in the controlled state, the resistor elements (27, 29) have exactly the same resistance values, characterised in that the resistor elements (27, 29) are disposed in open chambers (23, 25), that a first chamber (23) of the two chambers contains a static air volume, and the second chamber (25) is connected to the air inlet or gas outlet (3), via a duct (19), so that it is traversed by an air supply flow which is dependent on the pressure in the air inlet or gas outlet (3), and that the current branch of the resistor element (27b, 27c), disposed in the first chamber (23b, 23c), is connected to a supply voltage source (57; 97) of fixed voltage, and the current branch of the resistor element (29b, 29c), disposed in the second chamber (25b, 25c), is connected to a controllable supply voltage source (63; 138), that the regulating circuit has a control circuit (77, 79; 119, 121, 123), which responds both to the currents in the two current branches and to the voltages at the two resistor elements (27b, 29b; 27c, 29c), said circuit controlling the controllable supply voltage source (63; 138) in such a manner that the ratio of the voltage, which is applied to the resistor element, relative to the current through the resistor element is identical for both resistor elements, that each of the two current branches has a series resistor (51, 59; 91, 99), which is connected in series with the resistor element (27b, 29b; 27c, 29c) between the circuit point (53; 93), conducting the reference potential, and the resistor element (27b, 29b; 27c, 29c), that the connecting points of the resistor elements (27b, 29b; 27c, 29c) and the series resistors (51, 59; 91, 99) are connected to a first comparator circuit (65; 109), which supplies an output signal, corresponding to the difference between the currents in the two current branches, that the terminals of the resistor elements (27b, 29b; 27c, 29c), remote from the series resistors (51, 59; 91, 99), are connected to a second comparator circuit (75; 117), which supplies an output signal corresponding to the difference between the voltages at these terminals, that one of the two comparator circuits (75; 109) produces its output signal with an amplitude, which is dependent on the output signal of the other comparator circuit (65; 117), and controls the controllable supply voltage source (63; 138), and that the signal, representing the pressure in the air inlet or gas outlet, is produced in dependence on the output signal of the other comparator circuit (65; 117).

2. Apparatus according to claim 1, characterised in that the thermal resistor elements (27b, 29b) are cold conductors, and the output signal of the second comparator circuit (75) is dependent on the output signal of the first comparator circuit (65).

3. Apparatus according to claim 1, characterised in that the thermal resistor elements (27c, 29c) are hot conductors, and the output signal of the first comparator circuit (109) is dependent on the output signal of the second comparator circuit (117).

4. Apparatus according to claim 1, characterised in that the feed voltage sources (57, 63; 97, 138), relative to the reference potential at the circuit point (53; 93), which is common to both current branches, have opposite polarity, and both comparator circuits each have a respective differential amplifier (65, 75; 109, 117), which is connected to circuit points, corresponding to one another, of the two current branches at its inverting input via a resistance summing circuit (61, 63, 71, 73; 105, 107, 111, 113).

5. Apparatus according to claims 1 and 2, characterised in that the output of the differential amplifier (65) of the first comparator circuit is connected to the non-inverting input of the differential amplifier (75) of the second comparator circuit.

6. Apparatus according to claim 4, characterised in that the output of the differential amplifier (117) of the second comparator circuit is connected to the non-inverting input of the differential amplifier (109) of the first comparator circuit via an inverting amplifier (119).

7. Apparatus according to claim 5 or 6, characterised in that the amplification factor of the differential amplifier (65; 117), connected to the noninverting input, is such that the amplitude of the output signal, controlling the controllable supply voltage source, changes proportionally relative to the voltage at the series resistor.

8. Apparatus according to one of claims 1 to 7, characterised in that the regulating circuit (13) produces the fault signal, which drives the motor (5), in dependence on an electrical desired value signal.

9. Apparatus according to claim 8, characterised in that the desired value signal is produced in dependence on a control signal, which determines the burner efficiency of the fireplace.

10. Apparatus according to one of claims 1 to 9, characterised in that the current through the temperature-dependent resistors (27, 29) is such that the latter are heated to a temperature of at least 60°C, preferably more than 100°C.

11. Apparatus according to one of claims 1 to 10, characterised in that the two chambers (23, 25), which accommodate the temperature-dependent resistor elements (27, 29), are recesses in a block (21) made of a good heat-conducting material, more especially metal.

12. Apparatus according to one of claims 1 to 11, characterised in that the duct, which connects the second chamber (25) to the air inlet or gas outlet, is formed by a pipe (19) made of a poor heat-conducting material, more especially ceramics.

13. Apparatus according to one of claims 1 to 12, characterised in that the duct (19), which connects the second chamber to the air inlet or gas outlet, is formed by tubes (211, 213), which coaxially engage in one another in an overlapping region, a first tube (211) of said tubes protruding beyond the overlapping region transversely relative to the direction of flow of the air inlet or gas outlet (3f) into the air inlet or gas outlet (3f) and having an opening (221), which extends in the direction of flow, at its end situated within the air inlet or gas outlet (3f), and the second tube (213) of said tubes is connected to the second chamber (25f) and is sealed from the first tube (211) on the side of the overlapping region remote from the opening (221) of the first tube (211).

14. Apparatus according to one of claims 1 to 13, characterised in that the adjusting means (7e) is connected to a flap (203), which blocks the inlet apertures (201) in the two chambers when the adjusting means (7e) is in its position whereby the air inlet or gas outlet (3e) is blocked.

15. Apparatus according to one of claims 1 to 14, characterised in that a dust filter (225, 227), more especially an electrostatic filter, is disposed upstream of the apertures which connect the two chambers (23f, 25f) to ambient air.

16. Apparatus according to one of claims 1 to 15, characterised in that two limit switches (153, 155) are provided, which respond to the position of the adjusting means (7d), preferably two switches are provided which are controlled by a magnet, which is connected to the adjusting means, and are sensitive to magnetic fields, a first limit switch (153) of said switches responding when the air inlet or gas outlet (3d) is fully open, and a second limit switch (155) of said switches responding when the air inlet or gas outlet (3d) is fully blocked, that a fireplace control device, controlled by the two limit switches (153, 155), drives the adjusting means (7d) into the blocking position in response to a heat requirement control signal (U1), more especially of a thermostat (159), and activates a sensor zero-point monitoring circuit (169) which, when the air inlet or gas outlet (3d) is blocked, detects zero deviations of the sensor output signal and, when the correct zero-point occurs, releases the regulating circuit (13d) in order to regulate the position of the blocking means (7d) in dependence on the pressure.

17. Apparatus according to claim 16, characterised in that the sensor zero-point monitoring circuit (169) produces a signal (U3), which fully opens the blocking means (7d) and switches-on the burner of the fireplace, and in that the first limit switch (153) controls the release of the regulating circuit (13d) via a timing member (175), which delays the release.

18. Apparatus according to claim 16 or 17, characterised in that the burner of the fireplace (1d) can be switched-off immediately upon termination of the heat requirement signal (U1), and the regulating circuit (13d) can be switched-off via a time-delay member (177).

19. Apparatus according to one of claims 16 to 18, characterised in that a fault indicating circuit (181), which responds to an exhaust gas overflow indicator (183) and/or to a gate (185), which detects the response of the second limit switch (155) when the burner is simultaneously switched-on, sets a manually resettable storage member (179), which switches-off the burner, and indicates the fault optically and/or acoustically.

20. Apparatus according to one of claims 16 to 19, characterised in that the supply of current to the fireplace (1d) can be switched-on in dependence on the heat requirement signal (U1) via a controllable switch (163) and can be switched-off in dependence on the second limit switch (155).

FIG.1

FIG.2

FIG.3

1

## FIG. 4

## FIG. 7

## FIG. 8

## FIG. 9

2

FIG. 5

EP 0 156 175 B1

# FIG.6

a.) WÄRME BEDARF

b.) VERSORGUNG

c.) NULLPUNKT ABFRAGE

d.) KLAPPE AUF

e.) KLAPPE ZU

f.) ZEIT 60s

g.) ZEIT 15s

h.) HALTESIGNAL

i.) HEIZUNG

k.) KLAPPEN STELLUNG